# FASCICULE DE BREVET EUROPEEN

(11) **EP 3 736 106 B1**
(45) Date de publication et mention de la délivrance du brevet: **01.11.2023**
(21) Numéro de dépôt: 20170436.8
(22) Date de dépôt: 20.04.2020
(51) Int. Cl.: B29C 64/112, B23K 26/342, B23K 26/144, B33Y 30/00, B29C 64/209, B29C 64/118, B22F 10/25, B22F 12/53, B22F 10/32, B22F 12/20, B23K 26/12, B23K 103/14, B23K 26/14

(54) **TETE D'IMPRESSION 3D**
3D-DRUCKKOPF
3D PRINTING HEAD

(30) Priorité: 06.05.2019 FR 1904734
(43) Date de publication de la demande: 11.11.2020
(73) Titulaire: Sotimeco, 87280 Limoges (FR)
(72) Inventeur: COUSIN, Thierry, 33600 Pessac (FR); GUILLAUD, Nicolas, 33600 Pessac (FR)
(74) Mandataire: Debay, Damien

(56) Documents cités:
- EP-A1- 2 345 501
- WO-A1-95/20458
- DE-C1- 19 909 390
- US-A1- 2016 369 399
- US-A1- 2019 030 605
- US-A1- 2019 084 226

## Description

### DOMAINE TECHNIQUE DE L'INVENTION

La présente invention concerne de manière générale le domaine des imprimantes 3d, en particulier des têtes d'impression 3D.

Par impression 3D, on entend une impression tridimensionnelle utilisant un procédé de fabrication additive, afin de réaliser un objet ou une structure à partir d'une superposition de plusieurs couches de matière. On parle aussi de procédés de fabrication de pièces en volume par ajout ou agglomération de matière.

Elle concerne particulièrement les imprimantes à impression 3D utilisant la projection d'un flux d'une matière (poudre, fil ou liquide) sur un substrat avec un flux d'énergie laser, par exemple par la technologie CLAD (Construction Laser Additive Directe) ou par le procédé DED (Direct Energy Déposition, dépôt sous énergie concentrée). L'énergie laser va chauffer le substrat de façon à créer une zone chaude appelée bain de fusion. La matière à imprimer, par exemple une poudre, va fusionner de manière partielle ou totale, selon la technologie, et former une première couche, puis le processus est répété afin de créer une structure 3D à partir de la formation de plusieurs couches successives de matière, chaque couche fusionnant avec la couche sur laquelle elle est déposée lors du chauffage de cette dernière (qui forme le substrat pour la couche suivante) par l'énergie laser.

### ETAT DE LA TECHNIQUE ANTERIEURE

Il existe aujourd'hui de nombreuses technologies permettant de réaliser une impression 3D de façon plus ou moins précise et sûre, avec des combinaisons très différentes d'imprimantes 3D et de matières/matériaux associés.

En effet, le matériau utilisé pour l'impression 3D d'une structure, varie en fonction des contraintes de l'imprimante et de l'objet à réaliser. A cela s'ajoutent des contraintes de stabilité et d'interaction du matériau avec son environnement.

Il est connu des solutions utilisant un système de refroidissement et/ou un gaz de transport.

Ainsi, la demande US20180318929 décrit une imprimante 3D présentant une buse avec une première sortie qui peut recevoir un mélange de poudre métallique et un gaz de transport, un laser utilisé pour faire fondre la poudre sur le substrat, et un circuit de fluide de refroidissement pour refroidir la buse. Cependant, certains matériaux peuvent réagir avec l'air, qui peut par exemple provoquer l'oxydation du matériau à imprimer. Des particules présentes dans l'air peuvent aussi perturber l'impression en se mélangeant au matériau lorsqu'il est fondu, provoquant l'apparition d'anomalies, et d'impuretés dans l'objet imprimé.

La demande CN104611696 présente une tête d'impression de configuration complexe comprenant un faisceau laser divisé en deux faisceaux laser redirigé vers le substrat par des miroirs pour le chauffer afin de former un bain de fusion. La poudre est introduite à partir de multiples directions et propulsée à l'aide d'un ventilateur, et un gaz de protection annulaire à la périphérie de l'extrémité avant de la buse permet sa protection contre les interactions de l'environnement.
La demande EP2345501A1 présente une tête d'impression correspondant au préambule de la revendication 1.

Dans ce contexte, il serait donc intéressant de proposer une imprimante 3D qui permettent une impression améliorée au niveau de sa fiabilité et de sa réalisation, tout en proposant une buse fiable et simple de conception.

### EXPOSE DE L'INVENTION

La présente invention a donc pour objet de proposer une tête d'impression 3D, permettant de palier au moins une partie des inconvénients de l'art antérieur en proposant une impression dans laquelle la matière imprimée est protégée des interactions avec l'environnement extérieur qui sont ainsi limitées voire inexistantes, tout en proposant une buse fiable et simple de conception. L'invention a aussi pour but d'améliorer l'impression dans sa précision, sa fiabilité, sa précision et sa réalisation.

A cet effet, l'invention concerne une tête d'impression pour une imprimante 3D pour une impression tri-dimensionnelle sur un substrat comprenant au moins :
- Un conduit d'acheminement de matière sensiblement longitudinal suivant un axe (X) dans lequel passe un flux de transport de matière à déposer sur le substrat,
- Un circuit de refroidissement dans lequel circule un fluide de refroidissement, configuré pour refroidir la tête d'impression.
- Un laser configuré pour chauffer la matière à déposer et/ou le substrat,
- Un conduit de fluide protecteur dans lequel passe un flux protecteur de fluide protecteur,
- Une buse, au niveau de laquelle sortent au moins les flux issus desdits conduits, le laser étant déporté par rapport au conduit d'acheminement de matière et la paroi externe du conduit d'acheminement de matière est mitoyenne à la paroi interne du conduit de flux protecteur, les conduits étant configurés pour que le flux protecteur entoure le flux de matière et crée un environnement inerte à la sortie de la buse et dans un espace de travail autour du dépôt de la matière à déposer sur le substrat.

Selon l'inventiion, les conduits d'acheminement de matière et de fluide protecteur sont concentriques.

Selon une particularité, la matière à déposer est une poudre, un fil ou un liquide.

Selon une particularité, le fluide protecteur est un gaz inerte, par exemple l'argon.

Selon une particularité, la tête d'impression comprend un conduit de fluide de transport et un conduit de matière,
ledit conduit de fluide de transport présentant une section variable le long du conduit, la section variable comprenant une portion de section présentant un rétrécissement de sa section, suivie en aval par une portion présentant un élargissement de sa section pour atteindre la taille de la section du conduit d'acheminement de matière, ladite portion ainsi élargie étant connectée audit conduit d'acheminement, ledit conduit de matière rejoignant le conduit de fluide de transport avant ladite connexion audit conduit d'acheminement, de préférence au niveau de la portion présentant un élargissement de sa section.

Selon une particularité, le conduit de fluide protecteur comprend une portion présentant un rétrécissement de sa section de sorte que la pression et la vitesse du flux de fluide protecteur est augmenté à la sortie de la buse, par rapport à une portion dudit conduit situé en amont du conduit rétréci et de ladite sortie.

Selon une particularité, le laser suit un chemin direct depuis son émission jusqu'à la zone à chauffer.

Selon une particularité, la tête d'impression comprend en outre un barillet comprenant des orifices comprenant chacun un canal, chacun desdits canaux étant reliés en amont à un réservoir de matière ou à une source d'énergie lumineuse, et reliés en aval au barillet, ledit barillet étant configuré pour pouvoir effectuer un mouvement de rotation, les canaux étant disposés radialement autour de l'axe de rotation du barillet de sorte que ladite rotation dudit barillet permet l'alignement d'un canal parmi les canaux avec le conduit d'acheminement de matière afin de les mettre en correspondance l'un avec l'autre.

Selon une particularité, le barillet est solidaire d'un moyen de transmission de mouvement, préférentiellement une roue dentée, configurée pour être entrainée en rotation par un moyen d'entrainement complémentaire, par exemple une vis sans fin.

Selon une particularité, le moyen d'entrainement est couplé à un moteur.

Selon une particularité, la buse présente une tête de buse de forme circulaire, ovale, rectangulaire ou carrée.

Selon une particularité, les différents éléments de la tête d'impression peuvent être réalisées dans des matériaux choisi parmi au moins le cuivre, le carbure de tungstène, le saphir, la céramique, et l'acier inoxydable.

Selon une particularité, la buse comprend un moyen de fixation correspondant au standard de l'industrie et interchangeable sans avoir besoin de changer le corps de la tête d'impression.

L'invention concerne aussi le procédé d'impression 3D à l'aide d'une tête d'impression telle que décrit précédemment, dans lequel sont réalisés les étapes suivantes :
- Mise en fonction du circuit de refroidissement,
- Chauffage du substrat par un laser pour créer un bain de fusion,
- Propulsion d'un flux protecteur de fluide protecteur, de préférence un gaz inerte, par le conduit de fluide protecteur afin de créer un espace de travail inerte autour du bain de fusion et de la tête de la buse,
- Dépôt de matière sur le substrat par le flux de transport du conduit d'acheminement de matière de la tête d'impression.

L'invention concerne aussi une utilisation d'une tête d'impression telle que décrite précédemment, dans une imprimante 3D adaptée pour imprimer en 3D, munie ou non d'un bras robotisé, avec ou sans armoire robot.

### BREVE DESCRIPTION DES FIGURES

D'autres caractéristiques, détails et avantages de l'invention ressortiront à la lecture de la description qui suit en référence aux figures annexées, qui illustre :
- [Fig. 1] est une représentation schématique en coupe longitudinale d'un premier mode de réalisation particulier de l'invention,
- |Fig. 2] est une représentation schématique en coupe longitudinale d'un détail du premier mode de réalisation selon l'invention
- [Fig. 3] est une représentation schématique d'une vue de face d'un deuxième mode de réalisation selon l'invention.
- [Fig. 4] est une représentation schématique d'une vue en coupe longitudinale du deuxième mode de réalisation selon l'invention.
- [Fig. 5] est une représentation schématique d'une vue en coupe longitudinale d'un détail du deuxième mode de réalisation selon l'invention présentant un premier effet Venturi.
- [Fig. 6] est une représentation schématique d'une vue en coupe longitudinale d'un détail du troisième mode de réalisation selon l'invention présentant un second effet Venturi.
- [Fig. 7] est une représentation schématique d'une vue en coupe selon l'axe AA' du premier mode de réalisation selon l'invention.

### DESCRIPTION DETAILLEE DE L'INVENTION

De nombreuses combinaisons peuvent être envisagées sans sortir du cadre de l'invention ; l'homme de métier choisira l'une ou l'autre en fonction des contraintes économiques, ergonomiques, dimensionnelles ou autres qu'il devra respecter.

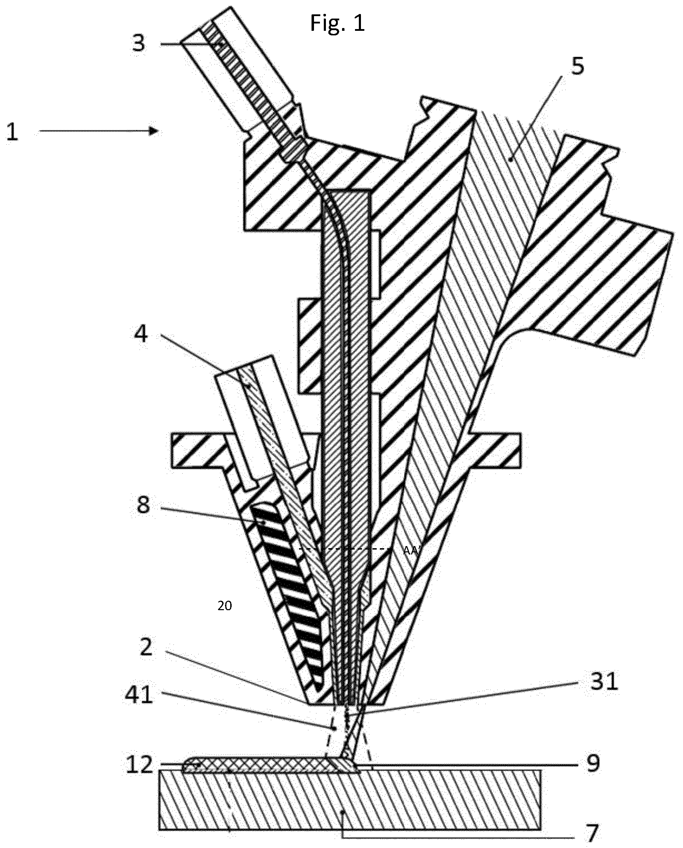

De manière générale, comme illustré par exemple de manière non limitative à la figure 1, la tête d'impression (1) pour une imprimante 3D pour imprimer tridimensionnellement sur un substrat (7) comprenant au moins :
- Un conduit d'acheminement de matière (3) sensiblement longitudinal suivant un axe (X) dans lequel passe un flux de transport de matière (31) à déposer sur le substrat (7),
- Un circuit de refroidissement (8) dans lequel circule un fluide de refroidissement, configuré pour refroidir la tête d'impression (1)
- Une source lumineuse (5), par exemple un laser (5) configuré pour chauffer la matière à déposer et/ou le substrat (7),
- Un conduit de fluide protecteur (4) dans lequel passe un flux protecteur de fluide protecteur,
- Une buse (2), au niveau de laquelle sortent au moins les flux issus desdits conduits, la paroi externe du conduit d'acheminement de matière (3) est mitoyenne à la paroi interne du conduit de flux protecteur, les conduits étant configurés pour que le flux protecteur crée un environnement inerte à la sortie de la buse (2) et dans un espace de travail autour du dépôt (20) de la matière à déposer sur le substrat (7).

On comprend par fluide un milieu matériel déformable au moins par chauffage. On regroupe sous cette appellation les liquides, les gaz et les plasmas, en opposition avec un solide.

On comprend par « buse » une sortie d'un tube qui peut comprendre un rétrécissement du diamètre de la section en aval, là où la matière sort, par rapport à une zone du tube en amont, dans le sens d'acheminement des flux vers le substrat (7). Cependant, ce terme n'induit pas forcément ce changement de diamètre de la section. La tête de buse (6) est ainsi l'extrémité de sortie de celle-ci, donc la portion la plus en aval, et la plus rétrécie dans le cas où on a un changement de diamètre.

On comprend par « en amont », une zone située à l'opposé de la tête de buse (6) de la tête d'impression (1), correspondant à la sortie du flux de transport de matière (31) et du flux protecteur (41). Par exemple l'axe, préférentiellement longitudinal, (X) passe par une zone proximale de la tête d'impression (1), qui contient les réservoirs de matière et de fluides, et une zone distale, d'où sortent la matière et les fluides. A l'inverse, on comprend par « en aval » la zone située vers la sortie des différents flux, et proche du substrat (7) sur lequel est imprimé la matière.

L'axe longitudinal (X) que suit le conduit d'acheminement de matière (3) est un axe par lequel passe le flux de transport de matière (31) à déposer sur le substrat (7). Cet axe traverse la buse (2) jusqu'au substrat (7). Cet axe n'est pas forcément perpendiculaire.

On comprend par « espace de travail » l'environnement entre la buse (2) et le substrat (7) qui doit être inerte afin de ne pas interagir avec la matière à déposer. Préférentiellement, l'espace de travail définit une zone d'une longueur comprise entre 5mm et 75mm préférentiellement entre 8mm et 75 encore préférentiellement entre 8 et 30 mm.

Avantageusement, la structure de la tête permet à la matière à déposer, aussi dit produit d'impression, de ne pas être impactée par l'environnement lors de son dépôt (20) sur le substrat (7). En effet, la protection du flux de matière (31) à transporter et à déposer est réalisée par la présence d'un second flux dit protecteur (41), composé d'un fluide protecteur, de préférence un gaz inerte, tel que l'argon par exemple. Ce flux de protection (41) est configuré pour agir comme un bouclier, créant une zone « neutre » qui empêche l'air et ses impuretés de se mélanger avec le flux de transport de matière (31). La matière du flux de transport, par exemple la poudre, est alors protégée de l'oxydation par l'oxygène, et de l'humidité contenue dans l'air qui pourrait modifier l'écoulement et la pulvérisation de ladite poudre, ou encore de particules comme des poussières environnantes. Le dépôt de la matière est donc mieux maitrisé et plus pur.

De plus, la présence de ce flux protecteur (41) permet aussi de concentrer le flux de transport de matière (31), et donc d'avoir moins de perte de matière, ce qui réduit les coûts de productions et réduit les risques sanitaires dus à une partie de la matière qui s'échappe du flux de transport dans les solutions antérieures.

Les applications comprenant une application d'alliage de titane nécessitent normalement des opérations d'inertage de l'imprimante 3D. En effet, il est nécessaire de protéger les poudres de titane afin de prévenir toute contamination notamment par l'air. Dans l'art antérieur, il est nécessaire que les machines d'impressions 3D soient totalement inertées et donc étanches. Il faut environ 24h pour inerter une machine ce qui représente un coût très important et des conditions d'utilisation très contraignantes. La présence du flux permet de réduire fortement voire totalement les contaminations de la matière à déposer tout en ne protégeant, en inertant, seulement la matière à déposer et l'espace de travail jusqu'au substrat (7) plutôt que l'ensemble de la machine. Le procédé d'inertage de la tête d'impression (1) complète, ou de l'imprimante complète, est donc inutile, ce qui réduit fortement les coûts et les contraintes de temps, en permettant un gain de temps conséquent.

Le fluide protecteur et le fluide de transport sont ici représentés comme provenant de deux réservoirs différents, mais il est possible qu'ils proviennent d'un même réservoir avant d'être dirigés vers les deux conduits différents.

Dans des modes de réalisation, le laser (5) est déporté par rapport au conduit d'acheminement de matière (3). Par déporté on entend désaxé, c'est-à-dire présentant un axe différent de celui du conduit d'acheminement de matière (3).Le laser (5) peut être situé dans la tête d'impression (1), mais est déporté et donc indépendant par rapport au conduit d'acheminement de matière et préférentiellement du conduit de fluide protecteur, ce qui permet de simplifier la chauffe du substrat (7) à l'endroit précis où la matière, par exemple la poudre, doit être déposé, et la chauffe de la matière elle-même le cas échéant, réalisée une fois que ladite matière est à l'extérieur de la buse. Par indépendant on entend que le laser ne partage pas le même conduit que le conduit d'acheminement de matière.

En d'autres termes, le laser (5) présente de préférence un axe différent de l'axe (X) du conduit d'acheminement de matière, au moins au niveau de leur sortie de la buse (2). Il peut ainsi facilement être déplacé, modifié et/ou réglé, y compris pendant le fonctionnement de la buse entière, du laser et/ou pendant l'acheminement de matière.

Cela permet aussi de faire varier la taille de l'espace de travail, c'est-à-dire la longueur de l'espace entre la sortie de la buse (2) et le substrat (7) où la matière est déposée. Il est en effet possible de modifier l'angle du laser (5) en déplaçant la source d'énergie, ici un laser (5), déportée, pour modifier la zone chauffée par ledit laser (5). La taille de l'espace de travail est ainsi facilement modifiable sans la changer la buse (2), comme c'est le cas dans l'art antérieur. Il suffit de déplacer l'ensemble de la tête d'impression (1), et de modifier l'angle du laser (5) en fonction du déplacement de ladite tête d'impression (1). Avantageusement, cette variation peut être réalisée avant ou pendant l'impression 3D.

Dans certains modes de réalisation, le laser n'est pas situé dans la tête d'impression. Dans certains autres modes de réalisation, il l'est, mais son conduit est indépendant des conduits d'acheminement de matière et de fluide protecteur.

Dans des modes de réalisation, la source d'énergie, par exemple un laser (5) est montée sur un moyen mobile actionnable, par exemple grâce à un moteur (16). Il est ainsi possible de modifier l'angle du laser (5), par exemple de manière automatisée par une programmation au préalable, ou durant l'impression. Ce moyen mobile peut être un axe de rotation par exemple, et permet de faire varier l'angle laser par rapport à l'axe X de sortie de la matière, autrement dit l'axe X dans lequel passe le flux de transport de matière à déposer sur le substrat (7).

Avantageusement, la structure de la tête d'impression (1) selon l'invention améliore sa compacité et diminue son poids, et donc son inertie ce qui permet d'augmenter la vitesse d'impression en baissant simultanément à la fois la consommation d'énergie et les erreurs d'alignement lors des mouvements répétés de la tête d'impression (1) pendant l'impression.

La matière à déposer et le fluide de transport sont mélangés ou associés dans une chambre en amont, mais il est possible et intéressant de les associer proche de leur sortie de la buse (2), afin de réduire la longueur des tuyaux utilisés et donc la quantité de matière perdue à chaque changement de matière.

Avantageusement, le fait d'avoir les parois des conduits mitoyennes permet d'utiliser des matériaux différents pour les conduits en fonction des contraintes associées à chaque conduit. Par exemple, on peut envisager un conduit d'acheminement de matière (3) dans un premier matériau très résistant par exemple du carbure de tungstène, et le conduit de flux protecteur dans un second matériau, par exemple du cuivre permettant une meilleure dissipation de la chaleur.

Dans certains modes de réalisation, la paroi externe du conduit d'acheminement de matière (3) correspond à la paroi interne du conduit de flux protecteur. Cela présente l'avantage de simplifier la conception des deux conduits.

Selon l'invention, les conduits d'acheminement de matière et de fluide protecteur sont concentriques. Cela présente l'avantage de répartir le fluide protecteur de manière uniforme autour du fluide de transport contenant la matière à déposer. Cela peut aussi permettre une longueur de jet plus importante hors de la buse (2), et éventuellement une protection sur une plus grande longueur hors de la buse (2).

Dans certains modes de réalisations, le diamètre du conduit de fluide protecteur (4) représente environ entre 1.2 et 5 fois le diamètre du conduit d'acheminement de matière (3), de préférence entre 1.3 et 3 fois le diamètre, préférentiellement encore environ 1.5 fois. En effet, le conduit de fluide protecteur (4) ne doit pas être beaucoup plus grand que le conduit d'acheminement de matière (3) qu'il entoure, afin de réduire la quantité de fluide protecteur utilisé, et la pression nécessaire à l'expulsion dudit fluide protecteur.

Dans certains modes de réalisation, le conduit de fluide protecteur (4) s'évase radialement, en aval, afin de former un cône divergent autour du conduit d'acheminement de matière (3). Dans d'autres modes de réalisation, le conduit de fluide protecteur (4) rétrécit radialement, en aval, afin de former un cône convergent autour du conduit d'acheminement de matière (3).

L'homme du métier dispose ainsi d'une diversité de modes de réalisation qui offres divers avantages. Ainsi le choix de la forme du conduit de protection sera adapté aux applications à réaliser, pour obtenir à la sortie de la buse (2) un cône de protection large autour du fluide de transport contenant la matière à déposer, dans le cas d'un conduit évasé formant un cône divergent, ou une augmentation de la vitesse du flux protecteur, dans le cas d'un conduit rétréci radialement, formant un cône convergent.

**Dans** certains modes de réalisation, le laser (5) suit un chemin direct depuis son émission jusqu'à la zone à chauffer, ce qui permet de réduire le nombre de composants dans la tête d'impression (1) et donc d'améliorer sa compacité. Cela permet aussi l'utilisation d'un laser (5) moins puissant que si le laser (5) est diffracté. Cela présente aussi l'avantage de proposer une tête d'impression (1) simple, sans besoin de moyens réfracteurs du laser (5) au niveau de la tête d'impression (1), ce qui réduit son poids.

Par « chemin direct », on entend une ligne droite, un trajet du rayon laser (5) sans réfraction sur un des murs du conduit dans lequel il passe.

Le laser (5) ainsi déporté dans un conduit droit améliore la précision de chauffe et limite la perte d'énergie.

Dans certains modes de réalisation tels qu'illustrés par exemple et de manière non limitative à la figure 1, le flux protecteur s'étend de façon annulaire et radialement vers l'extérieur, ce qui permet d'assurer un espace de travail large pour protéger efficacement la matière à déposer de son environnement.

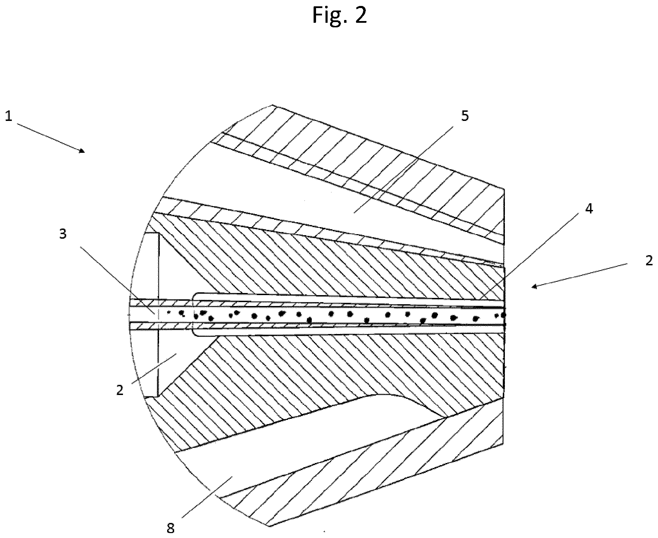

Le circuit de refroidissement (8) est ici représenté très proche de la sortie des conduits, donc de la buse (2), mais il peut être plus éloigné, comme représenté par exemple à la figure 2. Il est utilisé afin de refroidir la tête d'impression (1) en général, et particulièrement la buse (2) qui est la surface la plus proche du bain de fusion (9), donc de la source de chaleur.

Dans certains modes de réalisation, la matière à déposer est une poudre, un fil ou un liquide. Les caractéristiques décrites ci-dessus, par exemple les caractéristiques du flux protecteur, ou du laser (5) déporté, sont particulièrement avantageuses dans le cas d'une poudre.

Dans certains modes de réalisation non limitatifs, la matière à déposer est une poudre.

La matière déposée sur le substrat (7) est chauffée au niveau du bain de fusion (9) (9) par le laser (5), pour fusionner avec les autres particules de poudre déjà présentes sur le substrat (7).

Le flux de transport de matière (31) peut être composé de la matière à déposer seule, ou de celle-ci additionnée d'un fluide, préférentiellement inerte, de transport. Ce fluide peut être un liquide, par exemple de l'eau, ou un gaz, par exemple un gaz inerte tel que l'argon. Grâce à la présence du fluide inerte, pour le transport de la matière à déposer, par exemple de la poudre, l'oxygène présent dans l'air pourra plus difficilement réagir avec la matière, par exemple pour l'oxyder, et le risque que des impuretés, poussières présentes dans l'air se retrouvent dans ce mélange sera réduit.

Dans certains modes de réalisation, la tête d'impression (1) comprend en amont de la buse (2) un réservoir de fluide de transport, le réservoir comprenant un conduit de fluide de transport (24) qui rejoint le conduit d'acheminement de matière (3) en aval du réservoir.

Préférentiellement, les conduits de la tête d'impression présentent entre leurs extrémités une longueur environ inférieure à 50 cm, de préférence environ inférieure à 15 cm, par exemple environ 11 cm. Cela permet avantageusement de réduire la longueur des conduits, et donc les pertes de charges dues aux fluides qui traversent les conduits, et les pertes de matière dues à la matière présente dans les conduits à expulser et à jeter lors de l'arrêt de l'impression. En effet, en cas de changement ou d'arrêt de l'impression, la matière encore dans les conduits peut être contaminée par l'air extérieur et doit donc être éliminée. De la même façon, en cas de changement de matière à imprimer, il peut être nécessaire de retirer la matière précédente encore présente dans les conduits, en particulier si lesdits conduits sont longs et contiennent une quantité de matière résiduelle non négligeable.

Dans certains modes de réalisation, l'imprimante 3D ou la tête d'impression (1) comprend en amont du conduit d'acheminement de matière (3) un réservoir de matière à déposer, le dit réservoir comprenant un conduit de matière (27) à déposer qui rejoint en aval le conduit de fluide de transport (24).

Dans divers modes de réalisation, l'imprimante 3D ou la tête d'impression (1) comprend en amont du conduit de fluide protecteur (4) un réservoir de fluide protecteur, le dit réservoir étant relié audit conduit de fluide protecteur (4).

Dans certains modes de réalisation, l'imprimante 3D ou la tête d'impression (1) comprend un vibrateur, ou un bol vibrant, au niveau, ou à la place, du réservoir de matière à déposer. Ainsi, lorsque le vibrateur est activé, les vibrations émises font tomber par gravité de la matière, préférentiellement de la poudre, du réservoir dans le conduit de matière (27). La matière est ensuite aspirée par le flux de fluide de transport lorsqu'elle rejoint celui-ci.

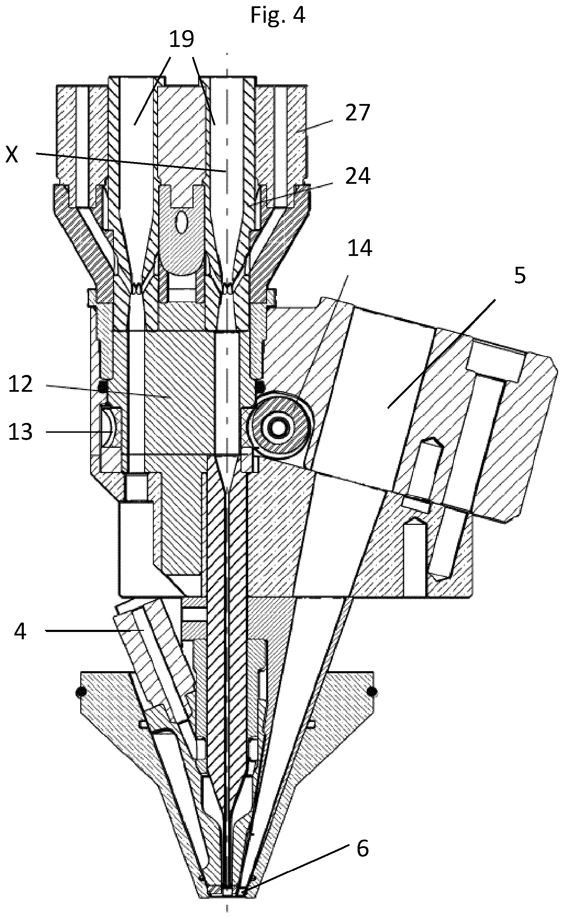

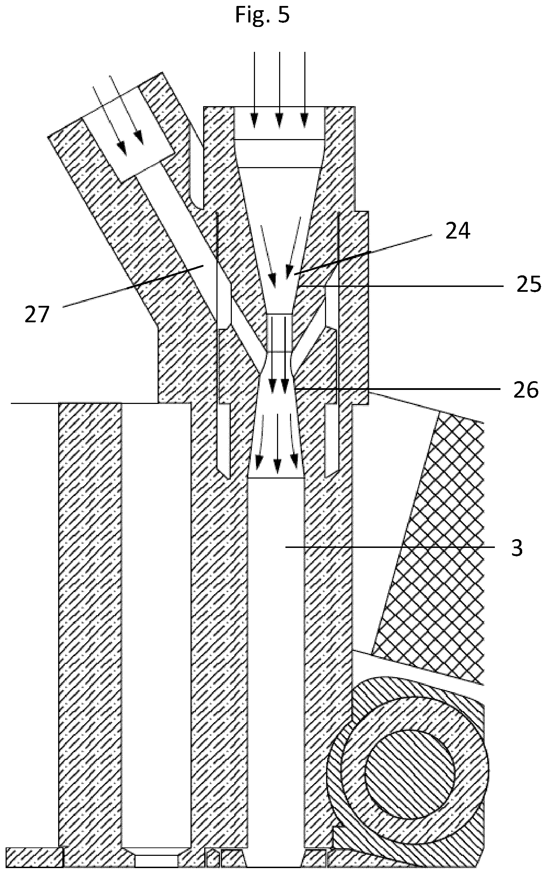

Dans divers modes de réalisation, dont des exemples illustrés de manière non limitative sont représentés aux figures 4 et 5, le conduit de fluide de transport (24) présente une section variable le long du conduit, la section variable comprenant une portion de section présentant un rétrécissement (25) de sa section, suivie en aval par une portion présentant un élargissement (26) de sa section pour atteindre la taille de la section du conduit d'acheminement de matière (3), ladite portion ainsi élargie étant connectée audit conduit d'acheminement (3), et, le conduit de matière (27) rejoignant le conduit de fluide de transport (24) avant ladite connexion audit conduit d'acheminement (3), de préférence au niveau de la portion présentant un élargissement (26) de sa section. En d'autres termes, le conduit de fluide de transport (24) comprend une portion de section variable configurée pour former un effet Venturi, c'est-à-dire présenter un profil provoquant une augmentation puis une diminution de la pression et de la vitesse du fluide, ladite portion reliant le conduit de fluide de transport (24), ne contenant que le fluide de transport qui n'est pas encore chargé de la matière à déposer, au conduit d'acheminement de matière (3). Ladite portion ainsi élargie peut présenter une section plus large, égale ou inférieure à la section du conduit de fluide de transport (24) avant rétrécissement (25). De préférence, le conduit de matière (27) rejoint le conduit de fluide de transport (24) au niveau de la portion de section élargie (26) avant la connexion avec le conduit d'acheminement de matière (3). Cela présente l'avantage de permettre un mélange optimal de la matière dans le fluide de transport. En effet, par l'effet Venturi, le fluide de transport, comprimé et convergent par le rétrécissement (25) de la section du conduit, est alors chargé en matière à déposer au moment où il se dilate et diverge avec ladite matière lors de l'élargissement (26) de la section, permettant une répartition optimale de la matière à déposer dans le flux de transport. Dans certains modes de réalisation, le conduit de fluide de transport (24) comprend une portion de section constante après la portion rétrécie (25) et avant l'élargissement de la portion (26). Dans certains modes de réalisation, le conduit de matière (27) rejoint le conduit de fluide de transport (24) au niveau de la portion de section constante.

De tels modes présentent des avantages tels qu'éviter de réaliser le mélange très en amont du conduit d'acheminement de matière (3), par exemple éviter de réaliser le mélange avant la tête d'impression (1), qui nécessiterait que la matière soit mélangée préalablement au fluide de transport, et/ou que le réservoir et le vibrateur soient remplis de fluide de transport sous pression. Cela permet aussi de réduire les pertes de charges et les pertes de matières respectivement provoquées par le passage de la matière dans les conduits et par de la matière résiduelle dans les conduits.

Dans certains modes de réalisation, l'imprimante 3D ou la tête d'impression (1) comprend plusieurs réservoirs de matières différentes, chacun comprenant un conduit étant relié en aval au conduit de fluide de transport (24) entre la section rétrécie et la section élargie.

Cela permet avantageusement de mélanger de façon simple et optimale plusieurs matières différentes à déposer.

Dans certains modes de réalisation, le fluide protecteur est un gaz inerte.

La figure 2 illustre un mode de réalisation selon la présente invention, dans lequel les conduits de matière et de fluide protecteur sont concentriques. Ainsi, à la sortie de la buse (2), la matière à déposer est entouré d'un fluide protecteur inerte plutôt que d'air ambiant susceptible d'interagir avec ladite matière.

Dans certains modes de réalisation, la vitesse du flux de fluide protecteur (41) est identique à celle du flux de transport de matière (31) à déposer. Dans d'autres modes de réalisation, la vitesse du flux de fluide protecteur est différente de celle du flux de transport de la matière à déposer. Cela permet d'adapter les flux en fonction des applications (types de matériaux, type de substrat (7) et formes à imprimer).

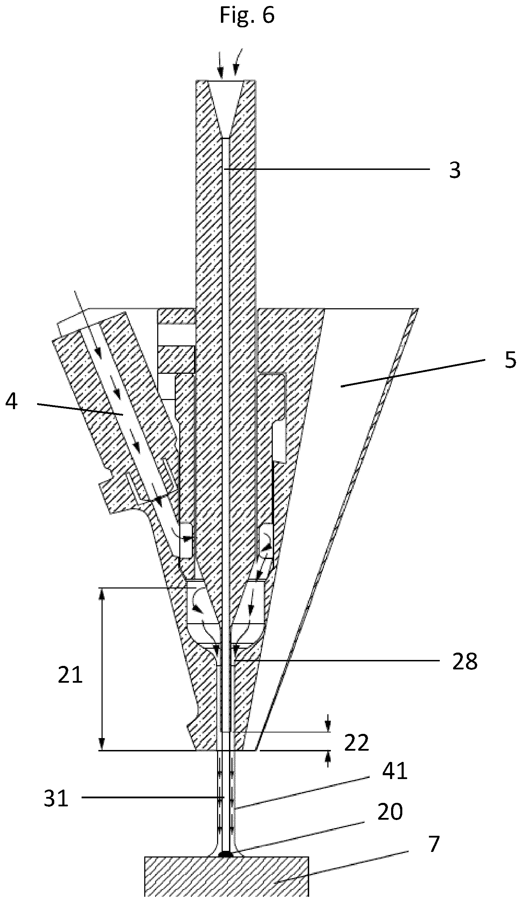

Dans certains modes de réalisation, tels qu'illustrés par exemple et de manière non limitative à la figure 6, le conduit de fluide protecteur (4) comprend une portion présentant un rétrécissement (28) de sa section de sorte que la pression et la vitesse du flux de fluide protecteur est augmenté à la sortie de la buse (2), par rapport à une portion dudit conduit situé en amont du conduit rétréci et de ladite sortie. De préférence, la portion rétrécie présente un taux de rétrécissement (21), ou taux de contraction, d'environ 20 à 30, préférentiellement 25, entre un point A situé avant le début du rétrécissement et un point B au niveau de la sortie du flux protecteur hors de la buse (2). En d'autres termes, le diamètre de la section de la portion rétrécie est 20 à 30, préférentiellement 25 fois plus faible que la section de la portion précédente. Avantageusement cela permet ainsi au flux de fluide protecteur de présenter une pression et une vitesse importantes malgré une plus faible pression appliquée en amont, au niveau du réservoir de fluide protecteur. Cela permet ainsi de former un tube de protection de fluide protecteur autour du flux de transport de matière, et ainsi d'obtenir un effet protecteur maximal, tout en concentrant la matière de façon précise, en réduisant la possibilité que celle-ci puisse être éjectée en dehors ce tube protecteur.

Le flux protecteur permet un effet de guidage de la poudre, renforcé par l'effet venturi. Cela augmente la distance possible de travail, c'est-à-dire la distance entre l'extrémité de la buse (2) et le point d'intersection du laser (5) avec le faisceau de poudre et/ou le substrat (7). Ainsi, lors de l'utilisation de matériaux à haut point de fusion, par exemple les aciers réfractaires, en aéronautique, la buse (2) est moins exposée à la chaleur et permet des hautes températures sans détruire l'extrémité de la buse (2) et sans que la poudre commence à passer en phase ductile à l'intérieur de la buse (2) à cause d'une trop grande chaleur, ce qui améliore la régularité du débit de sortie de la matière à imprimer. De plus, cette distance de travail plus importante améliore l'accessibilité de la buse (2) pour les pièces à imprimer de formes complexe à accessibilité réduite.

Grâce à l'effet Venturi, la vitesse et la pression des particules de poudre peuvent être beaucoup plus faible sans altérer la précision du dépôt, ce qui a pour avantage d'éviter une déformation du bain de fusion (9) qui est à l'état liquide. Cela permet ainsi l'obtention d'une qualité métallurgique moins sensible à la complexité des formes à obtenir.

Cette protection améliorée par le rétrécissement (28) de la section dudit conduit, a pour avantage d'augmenter la longueur des jets de fluides hors de la buse (2), sans augmenter la pression en amont.

Il est aussi possible de modifier la distance entre la sortie, en aval, du conduit d'acheminement de matière (3) et la sortie encore plus en aval, du conduit de fluide protecteur (4), la modification étant modulée en fonction des besoins des différentes applications. En d'autres termes, la distance de réglage (22) de la longueur des fins de conduits (3, 4) peut être modifiée en fonction des besoins et des contraintes.

Dans certains modes de réalisation, le flux de transport comprend un gaz inerte pour améliorer le transport de la matière,

Dans certains modes de réalisation, le fluide inerte du flux de transport est identique à celui présent dans le flux protecteur, par exemple l'argon.

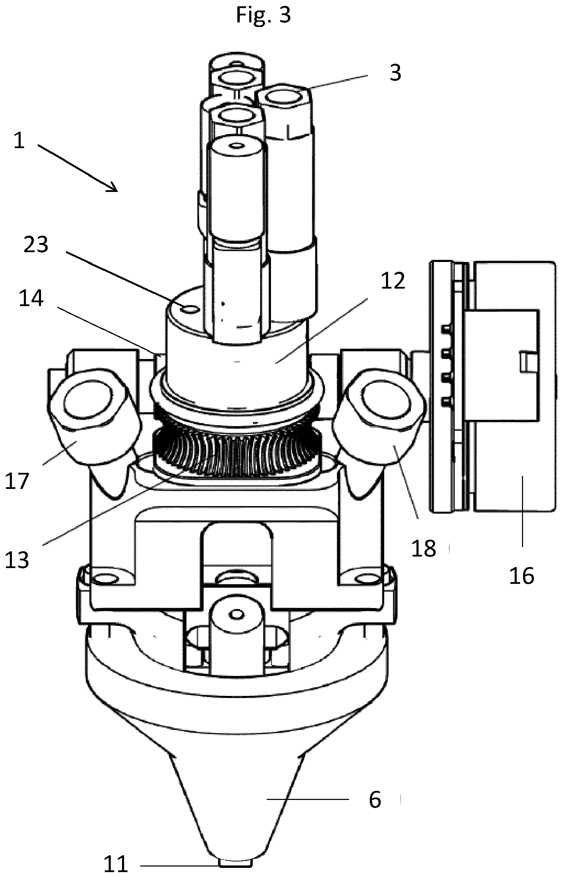

Dans des modes de réalisation représentant des variantes, tels qu'illustrées par exemple aux figures 3 à 5 de manière non limitative, un barillet (12) comprenant des orifices (23) comprenant chacun un canal (19), chacun desdits canaux (19) pouvant être reliés en amont à un réservoir de matière, par exemple un fil, ou un fluide, ou à une source d'énergie lumineuse, tel qu'un pointeur laser, et reliés en aval au barillet (12), ledit barillet (12) étant configuré pour pouvoir effectuer un mouvement de rotation, les canaux étant disposés radialement autour de l'axe de rotation du barillet (12) de sorte que ladite rotation dudit barillet (12) permet l'alignement d'un canal (19) parmi les canaux (19) avec le conduit d'acheminement de matière (3) afin de les mettre en correspondance l'un avec l'autre. En d'autres termes, les canaux (19) sont reliés à des sources en amont, là où se trouvent en général les réservoirs des différents flux et la source du laser (5), tandis que lesdits canaux (19) peuvent être alignés et reliés en aval au conduit d'acheminement de matière (3) dans la partie distale de la tête d'impression (1), plus proche de la tête de buse (6). Cela permet de pouvoir réaliser un gradient de différentes matières de manière automatique. Cela rend disponible différents types d'utilisation et d'impression avec la même tête d'impression (1).

Dans le mode de réalisation illustré à la figure 3, seul un couple de conduits d'acheminement de matière (3) et de fluide protecteur (4) sont représentés reliés à un orifice du barillet (12), mais il peut y avoir autant de couples de conduits d'acheminement de matière et de fluide protecteur qu'il y a d'orifices (23). Il est aussi possible que l'un des orifices (23) ne soit pas relié à un couple de conduits (3, 4) mais à un pointeur laser (non représenté), facilitant le paramétrage et réglage de la tête d'impression (1).

Les réservoirs de matières auxquels les canaux (19) du barillet (12) sont reliés peuvent comprendre seulement la matière à déposer, un mélange de matière à déposer et de fluide de transport, ou encore comprendre une structure telle que décrite précédemment, avec un réservoir de matière séparé d'un réservoir de fluide protecteur, les deux réservoirs se rejoignant par des conduits situés en amont du canal (19) correspondant, de préférence au niveau d'une section configurée pour créer un effet Venturi afin d'obtenir un flux de transport homogène.

Un canal (19) peut être relié à un pointeur laser, en supplément du laser (5) configuré pour chauffer la matière, ce qui permet de faciliter les réglages de la tête d'impression (1), le pointeur laser jouant le rôle de viseur, afin de matérialiser l'axe X, c'est-à-dire la position où va être déposée la matière lors de l'impression sur le substrat. Cela permet avantageusement de se positionner sur le substrat, ou à positionner le substrat, dans le cas où celui-ci est mobile. Ce pointeur laser n'est pas configuré pour chauffer.

Le barillet (12) peut présenter autant de canaux (19) que nécessaire, dans les limites imposées par l'encombrement. Dans des modes de réalisation, le barillet (12) comprend 6 canaux (19). Dans d'autres modes de réalisation, le barillet (12) en comprend 4.

Dans des modes de réalisation, le barillet (12) est solidaire d'un moyen de transmission (13) de mouvement, préférentiellement une roue dentée (13), configurée pour être entrainée en rotation par un moyen d'entrainement (14) complémentaire, par exemple une vis sans fin. Avantageusement, cela permet à l'utilisateur de choisir quel canal (19) aligner et donc quel flux doit être utiliser. Cela permet par exemple d'alterner deux matières différentes lors de l'utilisation d'une même buse (2), de manière automatique ou non.

De préférence, le moyen d'entrainement (14), préférentiellement la vis sans fin, est couplé à un moteur (16). Avantageusement, cela permet de rendre le choix de flux et de canaux (19) automatisé et automatique.

Le barillet (12) peut tourner dans les 2 sens, horaire et antihoraire. De préférence, sa rotation est restreinte à un tour complet afin de ne pas emmêler ou trop tirer les canaux (19) qui sont fixés sur ledit barillet (12).

Dans des modes de réalisation, la tête d'impression (1) comprend aussi une bague d'étanchéité, qui entoure au moins la buse (2). L'étanchéité est aussi améliorée par un joint torique d'étanchéité.

Dans des modes de réalisation, la buse (2) est standard et interchangeable et est car fixée mécaniquement. Ainsi, la conception selon l'invention permet aussi de changer de buse (2) sans avoir besoin de changer la tête d'impression (1) entière contrairement aux produits de l'art antérieur dans lesquels les orifices (23) de projection de poudre sont usinés "dans la masse "du corps de buse (2) pour des raisons d'encombrement. La structure permet le changement simple
- d'une buse (2) endommagée ou usée,
- de la forme du jet choisi,
- et de la taille de l'orifice en fonction du besoin de l'application

Le fluide de refroidissement circule dans le circuit de refroidissement (8) autour de la tête d'impression (1) de façon à refroidir les différents éléments, particulièrement les tuyaux formant les chemins de flux afin que ceux-ci ne chauffent pas trop, une trop haute température pourrait avoir comme effet de dégrader la qualité de la matière à imprimer.

Dans des modes de réalisation, la buse (2) présente une tête de buse (6) de forme circulaire, ovale, rectangulaire ou carrée.

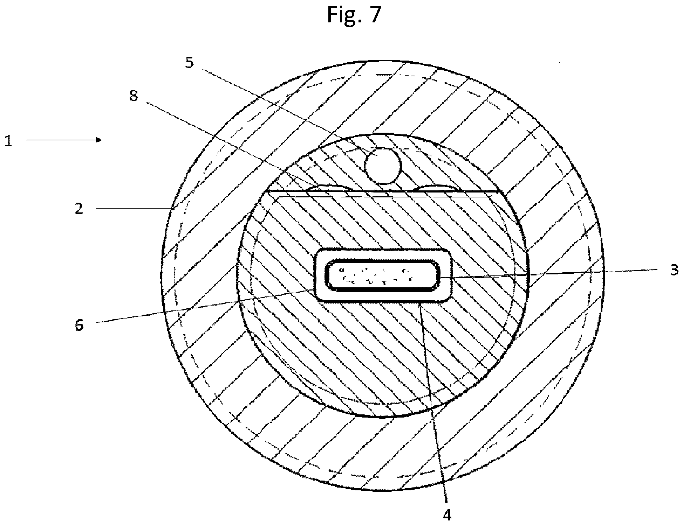

Dans des modes de réalisation, tels qu'illustrés à titre d'exemple à la figure 7, la tête de buse (6) présente une forme rectangulaire.

Avantageusement, avec une forme rectangulaire, et pour une même puissance de laser (5), il est possible de réaliser des dépôts larges et de faible épaisseur, par exemple pour des revêtement ou constructions additives sur des supports de faible épaisseur. En effet, une telle forme permet une meilleure dissipation de l'énergie thermique et donc moins de déformations dues au contraintes physiques et thermiques.

Les différents éléments de la tête d'impression (1) peuvent être réalisées dans toutes sortes de matériaux tels que le carbure, saphir, céramique, acier inoxydable, produits industriels et standards du commerce, de haute qualité et à faible coût tout en conservant un corps en cuivre permettant un bon refroidissement de l'ensemble, qui est particulièrement utile pour des utilisations à haute température. Ces matériaux permettent en effet de résister à des températures du double de celles du cuivre.

La buse (2) et/ou la tête de buse (6) est de préférence réalisée en carbure pour améliorer sa résistance à l'abrasion et sa tenue à la chaleur.

La tête de buse (6) peut aussi présenter un bouclier thermique (11) pour la protéger afin de résister à la température due à l'impression sans altérer l'accessibilité de l'ensemble.

De préférence, lors de l'impression, la tête d'impression est déplacée par rapport au substrat dans un sens unidirectionnel, ce qui permet de toujours déposer de la matière sur une zone du substrat qui est chauffée par le laser. Par exemple, illustré de manière non limitative à la figure 1, le dépôt est effectué dans une seule direction, ici de gauche à droite. Ainsi, lorsque la tête est déplacée, le laser arrive sur une nouvelle zone du substrat et la chauffe avant que la matière soit déposée. A l'inverse si le dépôt se fait de droite vers la gauche selon l'exemple représenté à la figure 1, le dépôt n'est pas optimal, car la matière peut être déposée avant que le laser chauffe la zone. Dans certains modes de réalisation, la tête d'impression peut tourner sur elle-même selon l'axe (X) pour que le déplacement de la tête d'impression soit toujours selon la même direction, la direction suivant un axe passant de la sortie du conduit d'acheminement de matière vers la sortie du conduit du laser (5). Une autre possibilité est que c'est le substrat qui est déplacé par rapport à la tête d'impression, qui elle reste alors immobile.

On comprendra aisément à la lecture de la présente demande que les particularités de la présente invention, comme généralement décrits et illustrés dans les figures, puissent être arrangés et conçus selon une grande variété de configurations différentes. Ainsi, la description de la présente invention et les figures afférentes ne sont pas prévues pour limiter la portée de l'invention définit par les revendications jointes mais représentent simplement des modes de réalisation choisis.

L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine défini par la portée des revendications jointes, ils doivent être considérés à titre d'illustration et l'invention ne doit pas être limitée aux détails donnés ci-dessus.

### LISTE DES SIGNES DE REFERENCE

1. Tête d'impression
2. Buse
3. Conduit d'acheminement de matière
4. Conduit de fluide protecteur
5. Laser
6. Tête de buse
7. Substrat
8. Circuit de refroidissement
9. Bain de fusion
11. Bouclier thermique
12. Barillet
13. Moyen de transmission
14. Moyen d'entrainement
16. Moteur
17. Entrée fluide de refroidissement
18. Sortie fluide de refroidissement
19.Canaux
20. Dépôt
21. Taux de rétrécissement
22. Distance de réglage de la longueur des fins de conduits 3 et 4
23. Orifices du barillet
24. Conduit de fluide de transport
25. Rétrécissement de la section du conduit de fluide de transport
26. Elargissement de la section du conduit de fluide de transport
27. Conduit de matière
28. Rétrécissement de la section du conduit de fluide protecteur
31. Flux de transport de matière
41.Flux protecteur
X. Axe du conduit d'acheminement

## Revendications

1. Tête d'impression (1) pour une imprimante 3D pour une impression tridimensionnelle sur un substrat (7) comprenant au moins :
- Un conduit d'acheminement de matière (3) sensiblement longitudinal suivant un axe (X) dans lequel passe un flux de transport de matière à déposer sur le substrat (7),
- Un circuit de refroidissement (8) dans lequel circule un fluide de refroidissement, configuré pour refroidir la tête d'impression (1).
- Un laser (5), configuré pour chauffer la matière à déposer et/ou le substrat (7),
- Un conduit de fluide protecteur (4) dans lequel passe un flux protecteur (41) de fluide protecteur,
- Une buse (2) , au niveau de laquelle sortent au moins les flux issus desdits conduits,
le laser (5) présentant un axe différent de l'axe (X) du conduit d'acheminement de matière, au moins au niveau de leur sortie de la buse (2), le laser ainsi désaxé étant indépendant par rapport au conduit d'acheminement de matière et ne partageant pas le même conduit que le conduit d'acheminement de matière, la paroi externe du conduit d'acheminement de matière (3) étant mitoyenne à la paroi interne du conduit de flux protecteur (4),
**caractérisé en ce que** les conduits d'acheminement de matière (3) et de fluide protecteur (4) sont concentriques pour que le flux protecteur (41) entoure le flux de matière et crée un environnement inerte à la sortie de la buse (2) et dans un espace de travail autour du dépôt (20) de la matière à déposer sur le substrat (7).

2. Tête d'impression (1) selon la revendication précédente dans laquelle la matière à déposer est une poudre, un fil ou un liquide.

3. Tête d'impression (1) selon l'une des revendications précédentes dans laquelle le fluide protecteur est un gaz inerte.

4. Tête d'impression (1) selon l'une des revendications précédentes dans laquelle elle comprend un conduit de fluide de transport (24) et un conduit de matière (27),
ledit conduit de fluide de transport (24) présentant une section variable le long du conduit, la section variable comprenant une portion de section présentant un rétrécissement (25) de sa section, suivie en aval par une portion présentant un élargissement (26) de sa section pour atteindre la taille de la section du conduit d'acheminement de matière (3), ladite portion ainsi élargie (26) étant connectée audit conduit d'acheminement (3), ledit conduit de matière (27) rejoignant le conduit de fluide de transport (24) avant ladite connexion audit conduit d'acheminement (3), de préférence au niveau de la portion présentant un élargissement (26) de sa section.

5. Tête d'impression (1) selon l'une des revendications précédentes dans laquelle le conduit de fluide protecteur comprend une portion présentant un rétrécissement (28) de sa section de sorte que la pression et la vitesse du flux de fluide protecteur est augmenté à la sortie de la buse (2), par rapport à une portion dudit conduit situé en amont du conduit rétréci et de ladite sortie.

6. Tête d'impression (1) selon l'une des revendications précédentes dans laquelle le laser (5) suit un chemin direct depuis son émission jusqu'à la zone à chauffer.

7. Tête d'impression (1) selon l'une des revendications précédentes, dans laquelle la tête d'impression (1) comprend en outre un barillet (12) comprenant des orifices (23) comprenant chacun un canal (19), chacun desdits canaux (19) étant reliés en amont à un réservoir de matière ou à une source d'énergie lumineuse, et reliés en aval au barillet (12), ledit barillet étant configuré pour pouvoir effectuer un mouvement de rotation, les canaux (19) étant disposés radialement autour de l'axe de rotation du barillet (12) de sorte que ladite rotation dudit barillet (12) permet l'alignement d'un canal (19) parmi les canaux (19) avec le conduit d'acheminement de matière (3) afin de les mettre en correspondance l'un avec l'autre.

8. Tête d'impression (1) selon la revendication précédente, dans laquelle le barillet (12) est solidaire d'un moyen de transmission (13) de mouvement, préférentiellement une roue dentée (13), configurée pour être entrainée en rotation par un moyen d'entrainement (14) complémentaire, par exemple une vis sans fin.

9. Tête d'impression (1) selon la revendication précédente, dans laquelle le moyen d'entrainement (14) est couplé à un moteur (16).

10. Tête d'impression (1) selon l'une des revendications précédentes dans laquelle la buse présente une tête de buse (6) de forme circulaire, ovale, rectangulaire ou carrée.

11. Tête d'impression (1) selon l'une des revendications précédentes dans laquelle les différents éléments de la tête d'impression (1) peuvent être réalisées dans des matériaux choisi parmi au moins le cuivre, le carbure de tungstène, le saphir, la céramique, et l'acier inoxydable.

12. Tête d'impression (1) selon l'une des revendications précédentes dans laquelle la buse comprend un moyen de fixation correspondant au standard de l'industrie et interchangeable sans avoir besoin de changer le corps de la tête d'impression (1).

13. Procédé d'impression 3D à l'aide d'une tête d'impression (1) selon l'une des revendications 1 à 12 dans lequel sont réalisés les étapes suivantes :
- Mise en fonction du circuit de refroidissement (8),
- Chauffage du substrat (7) par un laser (5) pour créer un bain de fusion (9),
- Propulsion d'un flux protecteur de fluide protecteur, de préférence un gaz inerte, par le conduit de fluide protecteur afin de créer un espace de travail inerte autour du bain de fusion (9) et de la tête de la buse,
- Dépôt de matière sur le substrat (7) par le flux de transport du conduit d'acheminement de matière de la tête d'impression (1)

14. Utilisation d'une tête d'impression (1) selon l'une quelconque des revendications 1 à 12 dans une imprimante 3D adaptée pour imprimer en 3D, munie ou non d'un bras robotisé, avec ou sans armoire robot.

## Patentansprüche

1. Druckkopf (1) für einen 3D-Drucker für einen dreidimensionalen Druck auf ein Substrat (7), beinhaltend mindestens Folgendes:
- eine Materialzufuhrleitung (3), die gemäß einer Achse (X) im Wesentlichen längs verläuft und durch die ein Materialtransportfluss hindurchgeht, der auf das Substrat (7) aufgebracht werden soll,
- einen Kühlkreislauf (8), in dem ein Kühlfluid zirkuliert und der dazu konfiguriert ist, den Druckkopf (1) zu kühlen,
- einen Laser (5), der dazu konfiguriert ist, das aufzubringende Material und/oder das Substrat (7) zu erhitzen,
- eine Schutzfluidleitung (4), durch die ein Schutzfluss (41) eines Schutzfluids hindurchgeht,
- eine Düse (2), an der mindestens die aus den Leitungen stammenden Flüsse austreten,
wobei der Laser (5) eine Achse aufweist, die sich von der Achse (X) der Materialzufuhrleitung mindestens im Bereich ihres Ausgangs aus der Düse (2) unterscheidet, wobei der so axial verschobene Laser mit Bezug auf die Materialzufuhrleitung unabhängig ist und sich nicht dieselbe Leitung mit der Materialzufuhrleitung teilt, wobei sich die Außenwand der Materialzufuhrleitung (3) mittig zu der Innenwand der Schutzflussleitung (4) befindet,
**dadurch gekennzeichnet, dass** die Materialzufuhrleitung (3) und die Schutzfluidleitung (4) konzentrisch sind, damit der Schutzfluss (41) den Materialfluss umgibt und am Ausgang der Düse (2) und in einem Arbeitsbereich rund um den Auftrag (20) des auf das Substrat (7) aufzubringenden Materials eine inerte Umgebung schafft.

2. Druckkopf (1) nach dem vorhergehenden Anspruch, wobei das aufzubringende Material ein Pulver, ein Draht oder eine Flüssigkeit ist.

3. Druckkopf (1) nach einem der vorhergehenden Ansprüche, wobei das Schutzfluid ein Inertgas ist.

4. Druckkopf (1) nach einem der vorhergehenden Ansprüche, wobei er eine Transportfluidleitung (24) und eine Materialleitung (27) beinhaltet,
wobei die Transportfluidleitung (24) entlang der Leitung einen variablen Querschnitt aufweist, wobei der variable Querschnitt einen Querschnittsabschnitt beinhaltet, der eine Verengung (25) seines Querschnitts aufweist, stromabwärts gefolgt von einem Abschnitt, der eine Erweiterung (26) seines Querschnitts aufweist, um die Größe des Querschnitts der Materialzufuhrleitung (3) zu erreichen, wobei der so erweiterte Abschnitt (26) mit der Zufuhrleitung (3) verbunden ist, wobei die Materialleitung (27) die Transportfluidleitung (24) vor der Verbindung mit der Zufuhrleitung (3) erreicht, vorzugsweise im Bereich des Abschnitts, der eine Erweiterung (26) seines Querschnitts aufweist.

5. Druckkopf (1) nach einem der vorhergehenden Ansprüche, wobei die Schutzfluidleitung einen Abschnitt beinhaltet, der eine Verengung (28) seines Querschnitts aufweist, sodass der Druck und die Geschwindigkeit des Schutzfluidflusses am Ausgang der Düse (2) in Bezug auf einen Abschnitt der Leitung, der sich stromaufwärts der verengten Leitung und des Ausgangs befindet, erhöht werden.

6. Druckkopf (1) nach einem der vorhergehenden Ansprüche, wobei der Laser (5) von seiner Emission bis zu dem zu erhitzenden Bereich einem direkten Weg folgt.

7. Druckkopf (1) nach einem der vorhergehenden Ansprüche, wobei der Druckkopf (1) ferner eine Trommel (12) beinhaltet, die Öffnungen (23) beinhaltet, die jeweils einen Kanal (19) beinhalten, wobei jeder der Kanäle (19) stromaufwärts mit einem Materialspeicher oder einer Lichtenergiequelle verbunden ist und stromabwärts mit der Trommel (12) verbunden ist, wobei die Trommel dazu konfiguriert ist, eine Drehbewegung ausführen zu können, wobei die Kanäle (19) radial um die Drehachse der Trommel (12) angeordnet sind, sodass die Drehung der Trommel (12) die Ausrichtung eines Kanals (19) der Kanäle (19) nach der Materialzufuhrleitung (3) ermöglicht, um diese aufeinander abzustimmen.

8. Druckkopf (1) nach dem vorhergehenden Anspruch, wobei die Trommel (12) fest mit einem Mittel (13) zur Übertragung von Bewegung, vorzugsweise einem Zahnrad (13), verbunden ist, das dazu konfiguriert ist, durch ein komplementäres Antriebsmittel (14), beispielsweise eine Schnecke, drehend angetrieben zu werden.

9. Druckkopf (1) nach dem vorhergehenden Anspruch, wobei das Antriebsmittel (14) mit einem Motor (16) gekoppelt ist.

10. Druckkopf (1) nach einem der vorhergehenden Ansprüche, wobei die Düse einen Düsenkopf (6) mit kreisförmiger, ovaler, rechteckiger oder quadratischer Form aufweist.

11. Druckkopf (1) nach einem der vorhergehenden Ansprüche, wobei die unterschiedlichen Elemente des Druckkopfes (1) aus Materialien hergestellt sein können, die mindestens aus Folgendem ausgewählt sind: Kupfer, Wolframcarbid, Saphir, Keramik und Edelstahl.

12. Druckkopf (1) nach einem der vorhergehenden Ansprüche, wobei die Düse ein Befestigungsmittel beinhaltet, das dem Industriestandard entspricht und ausgewechselt werden kann, ohne dass der Körper des Druckkopfes (1) gewechselt werden muss.

13. Verfahren für einen 3D-Druck mit Hilfe eines Druckkopfes (1) nach einem der Ansprüche 1 bis 12, bei dem die folgenden Schritte durchgeführt werden:
- Inbetriebnehmen des Kühlkreislaufs (8),
- Erhitzen des Substrats (7) durch einen Laser (5), um ein Schmelzbad (9) zu schaffen,
- Treiben eines Schutzflusses eines Schutzfluids, vorzugsweise eines Inertgases, durch die Schutzfluidleitung, um um das Schmelzbad (9) und den Kopf der Düse herum einen inerten Arbeitsraum zu schaffen,
- Auftragen von Material auf das Substrat (7) durch den Transportfluss der Materialzufuhrleitung des Druckkopfes (1) .

14. Verwenden eines Druckkopfes (1) nach einem beliebigen der Ansprüche 1 bis 12 in einem 3D-Drucker, der dazu angepasst ist, in 3D zu drucken, und über einen Roboterarm verfügt oder nicht, mit oder ohne Roboterschrank.

## Claims

1. Print head (1) for a 3D printer for three-dimensional printing on a substrate (7), comprising at least:
• a material delivery conduit (3) substantially longitudinal along an axis (X) through which passes a transport flow of material to be deposited on the substrate (7),
• a cooling circuit (8) through which a cooling fluid circulates, configured to cool the print head (1).
• a laser (5), configured to heat the material to be deposited and/or the substrate (7),
• a protective fluid conduit (4) through which a protective fluid flow (41) passes,
• a nozzle (2), at which at least the flows from said conduits exit,
the laser (5) having a different axis from the axis (X) of the material delivery conduit, at least at their exit from the nozzle (2), the thus misaligned laser being independent from the material delivery conduit and not sharing the same conduit as the material delivery conduit, the external wall of the material delivery conduit (3) being contiguous with the internal wall of the protective fluid flow conduit (4),
**characterized in that** the material delivery conduit (3) and the protective fluid conduit (4) are concentric so that the protective flow (41) surrounds the material flow and creates an inert environment at the nozzle (2) exit and in a working space around the deposition (20) of the material to be deposited on the substrate (7).

2. Print head (1) according to the preceding claim, wherein the material to be deposited is a powder, a filament, or a liquid.

3. Print head (1) according to any of the preceding claims, wherein the protective fluid is an inert gas.

4. Print head (1) according to any of the preceding claims, wherein it comprises a material transport fluid conduit (24) and a material conduit (27), said material transport fluid conduit (24) having a variable section along the conduit, the variable section comprising a section portion having a constriction (25) of its section, followed downstream by a portion having an expansion (26) of its section to reach the size of the section of the material delivery conduit (3), said thus expanded portion (26) being connected to said material delivery conduit (3), said material conduit (27) joining the material transport conduit (24) before said connection to the material delivery conduit (3), preferably at the portion having an expansion (26) of its section.

5. Print head (1) according to any of the preceding claims, wherein the protective fluid conduit comprises a section portion having a constriction (28) of its section so that the pressure and velocity of the protective fluid flow are increased at the nozzle (2) exit, relative to a portion of said conduit located upstream of the narrowed conduit and said exit.

6. Print head (1) according to any of the preceding claims, wherein the laser (5) follows a direct path from its emission to the area to be heated.

7. Print head (1) according to any of the preceding claims, wherein the print head (1) further comprises a barrel (12) comprising orifices (23), each of which includes a channel (19), each of said channels (19) being upstream connected to a material reservoir or a light energy source, and downstream connected to the barrel (12), said barrel being configured to be rotatable, and the channels (19) being arranged radially around the axis of rotation of the barrel (12) so that the rotation of said barrel (12) allows alignment of a channel (19) among the channels (19) with the material delivery conduit (3) to align them with each other.

8. Print head (1) according to the preceding claim, wherein the barrel (12) is integral with a motion transmission means (13), preferably a toothed wheel (13), configured to be rotated by a complementary drive means (14), for example, a worm gear.

9. Print head (1) according to the preceding claim, wherein the drive means (14) is coupled to a motor (16).

10. Print head (1) according to any of the preceding claims, wherein the nozzle has a nozzle head (6) of circular, oval, rectangular, or square shape.

11. Print head (1) according to any of the preceding claims, wherein the various elements of the print head (1) can be made from materials selected from at least copper, tungsten carbide, sapphire, ceramics, and stainless steel.

12. Print head (1) according to any of the preceding claims, wherein the nozzle includes a mounting means corresponding to the industry standard and is interchangeable without the need to change the body of the print head (1).

13. A method of 3D printing using a print head (1) according to any one of claims 1 to 12, comprising the following steps:
• Activation of the cooling circuit (8),
• Heating the substrate (7) with a laser (5) to create a melt pool (9),
• Propelling a protective fluid flow, preferably an inert gas, through the protective fluid conduit to create an inert working space around the melt pool (9) and the nozzle head,
• Deposition of material on the substrate (7) by the material transport flow of the print head (1).

14. Use of a print head (1) according to any one of claims 1 to 12 in a 3D printer suitable for 3D printing, with or without a robotic arm, with or without a robotic enclosure.
